# DEMANDE DE BREVET EUROPEEN

(11) **EP 1 093 979 A1**
(43) Date de publication de la demande: **25.04.2001**
(21) Numéro de dépôt: 99402617.7
(22) Date de dépôt: 22.10.1999
(51) Int. Cl.: B60R 21/20

(54) **Garniture pour montant de baie de véhicule automobile**

(71) Demandeur: RENAULT, 92109 Boulogne-Billancourt (FR)
(72) Inventeur: Ponceau, Philippe, 78610 Le Perray en Yvelines (FR)

(57) **Abrégé**

Cette garniture (2) pour montant de baie (3) de véhicule automobile (1) conformée pour loger au moins une partie (4', 7) d'un dispositif de rideau gonflable (4) est remarquable en ce qu'elle comprend au moins une patte (8) destinée à être fixée à la tôlerie (9) dudit véhicule (1) de manière à éviter l'éjection de ladite garniture (2) lors du déploiement dudit rideau gonflable (4).

## Description

La présente invention est relative à une garniture pour montant de baie de véhicule automobile.

Depuis quelques années, on améliore la sécurité des véhicules automobiles en implantant à l'intérieur des habitacles des dispositifs gonflables de protection des passagers.

Selon une évolution récente, on utilise des dispositifs gonflables de protection latérale, couramment appelés rideaux gonflables, logés en partie derrière les garnitures de montants de baies et au-dessus de l'habillage de pavillon.

Lors du déploiement de ces rideaux gonflables, les garnitures de montants de baies ont tendance à être éjectées vers l'intérieur de l'habitacle, au risque de blesser les passagers.

Pour éviter cet inconvénient, on a mis au point divers dispositifs anti-éjection, ayant tous ceci en commun qu'ils sont relativement complexes et coûteux à fabriquer.

La présente invention a pour but de fournir une garniture pour montant de baie permettant de s'affranchir de façon simple et économique du risque d'éjection lors du déploiement d'un rideau gonflable.

On atteint ce but de l'invention, ainsi que d'autres qui apparaîtront à la lecture de la description qui va suivre, avec une garniture pour montant de baie de véhicule automobile conformée pour loger au moins une partie d'un dispositif de rideau gonflable, remarquable en ce qu'elle comprend au moins une patte destinée à être fixée à la tôlerie dudit véhicule de manière à éviter l'éjection de ladite garniture lors du déploiement dudit rideau gonflable.

Suivant d'autres caractéristiques de l'invention:
- ladite garniture est destinée à habiller un montant de pare-brise, et ladite patte est destinée à être fixée sur la traverse supérieure dudit pare-brise par des moyens permettant par ailleurs de fixer un autre accessoire tel qu'un pare-soleil,
- ladite patte est formée d'une seule pièce avec le reste de ladite garniture, et une ligne de pliage permet l'articulation de cette patte,
- ledit dispositif de rideau gonflable comprend une sangle de retenue interposée entre ledit rideau et ledit montant de baie, et ladite garniture est conformée pour loger au moins une partie de ladite sangle,
- ladite garniture est conformée pour loger la totalité de ladite sangle et au moins une partie dudit rideau gonflable.

Grâce à ces caractéristiques, on peut réaliser un dispositif anti-éjection en donnant simplement une forme appropriée à la garniture. Aucune pièce supplémentaire n'est nécessaire, ce qui permet de diminuer notablement le prix de revient par rapport aux dispositifs anti-éjection de la technique antérieure.

D'autres caractéristiques et avantages de la présente invention apparaîtront à la lecture de la description qui va suivre et à l'examen du dessin annexé, dans lequel:
- la figure 1 est une vue en coupe longitudinale d'un véhicule automobile comprenant une garniture de montant de pare-brise selon l'invention, le rideau gonflable correspondant étant représenté en position déployée,
- la figure 2 est une vue en perspective partielle de l'intérieur de l'habitacle du véhicule automobile de la figure 1, sur laquelle on voit notamment la garniture selon l'invention et le rideau gonflable en position repliée,
- la figure 3 est analogue à la figure 2, à ceci près que le rideau gonflable est représenté en position déployée,
- la figure 4 est une vue en coupe selon le plan IV de la figure 2,
- la figure 5 est une vue en coupe selon le plan V de la figure 3.

Dans ce qui suit, on va décrire la garniture selon l'invention dans le cas où elle est destinée à habiller un montant de pare-brise de véhicule automobile, car il se trouve qu'elle est particulièrement adaptée à cette application.

Il ne faut cependant pas perdre de vue que cette garniture pourrait aussi être destinée à habiller un montant de lunette arrière de véhicule automobile, moyennant quelques modifications de détail qui tombent également dans le champ de la présente invention.

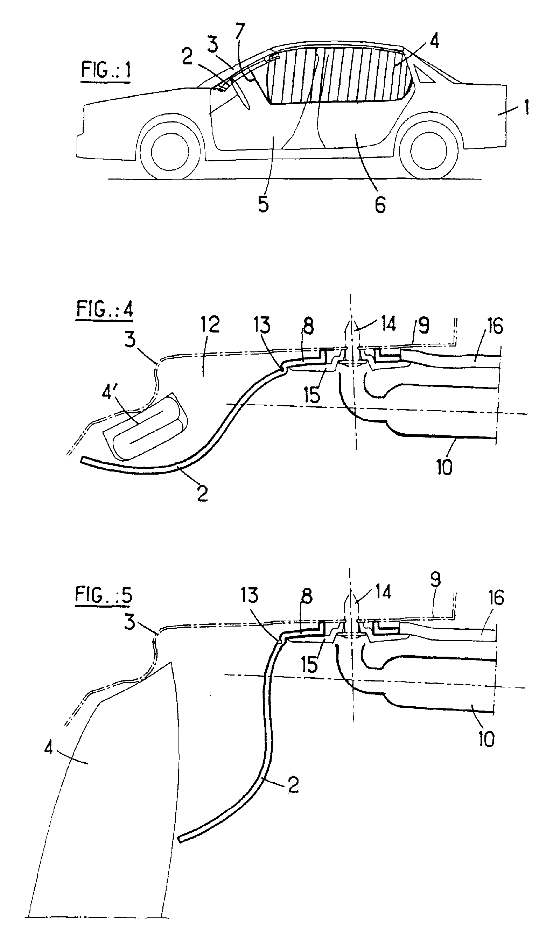

On se reporte à présent à la figure 1, sur laquelle on peut voir un véhicule 1 comprenant une garniture 2 de montant de pare-brise 3 selon l'invention.

Sur cette figure, un rideau gonflable 4 est représenté en position déployée. Ce rideau s'étend sur les parties supérieures des portières avant 5 et arrière 6 du véhicule 1, et il est destiné à protéger latéralement les passagers en cas d'accident.

Une sangle de retenue 7 interposée entre le montant 3 et le rideau 4 permet de maintenir ce dernier en place.

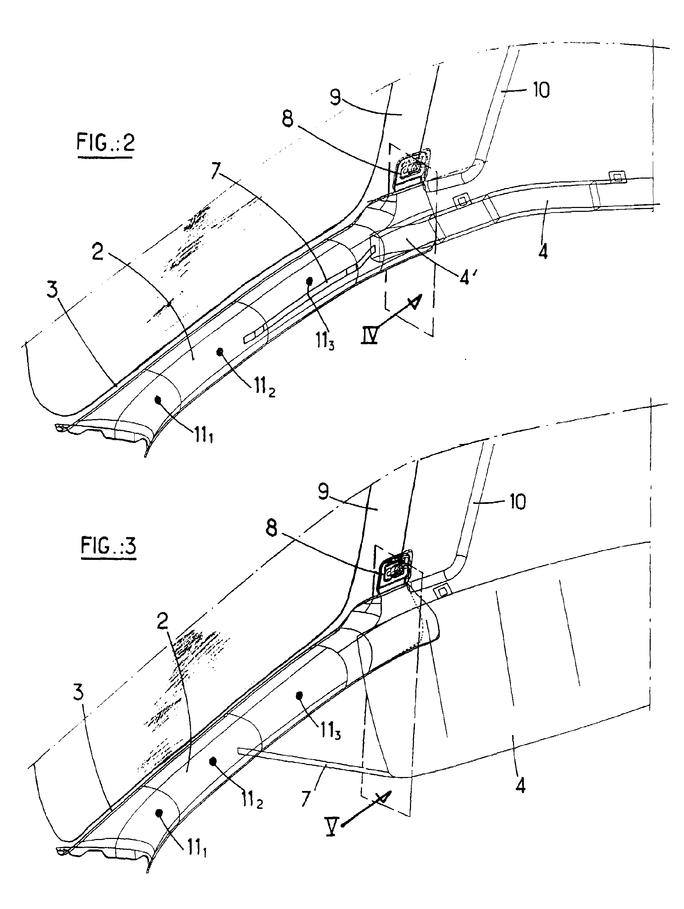

On se reporte à présent à la figure 2, sur laquelle on voit le rideau 4 en position repliée.

Une partie 4' de ce rideau ainsi que la sangle 7 sont logées entre la garniture 2 et le montant de pare-brise 3.

De manière caractéristique selon l'invention, la garniture 2 comprend une patte 8 qui est fixée à la traverse supérieure de pare-brise 9 par des moyens permettant par ailleurs de fixer un pare-soleil 10.

La garniture 2 comprend en outre d'autres moyens de fixation classiques tels que des clips 11₁, 11₂, 11₃ répartis sur toute sa longueur.

On se reporte à présent à la figure 3, sur laquelle on a représenté le rideau 4 en position déployée.

Lorsque le rideau se trouve dans cette position, la sangle 7 est tendue, les clips 11₁, 11₂, 11₃ sont débrayés, et la garniture 2 est écartée par rapport à sa position normale (représentée en pointillés).

On se reporte à présent aux figures 4 et 5 sur lesquelles on peut voir certains détails correspondant respectivement aux figures 2 et 3.

Comme on peut le voir sur la figure 4, la garniture 2 est conformée de manière à définir un logement 12 pouvant contenir la sangle 7 (non représentée) et la partie 4' du rideau 4 lorsqu'il est en position repliée.

La patte 8 est de préférence formée d'une seule pièce avec le reste de la garniture 2, par exemple par moulage, une ligne de pliage 13 permettant son articulation.

Cette patte est fixée à la traverse supérieure de pare-brise 9 par une vis 14 et une rondelle 15 permettant par ailleurs de fixer le pare-soleil 10 (ainsi qu'un habillage de pavillon 16).

On voit sur la figure 5 la manière dont la garniture 2 est écartée du montant 3 autour de la ligne de pliage 13 lorsque le rideau 4 est en position déployée.

Le fonctionnement et les avantages de la garniture selon l'invention découlent directement de la description qui précède.

Lorsque le rideau gonflable 4 se déploie, il écarte brutalement la garniture 2 du montant 3 et entraîne la sangle de retenue 7 qui débraye les clips 11₁, 11₂, 11₃.

La garniture 2 pivote alors autour de la ligne de pliage 13, tout en restant fermement fixée à la traverse supérieure de pare-brise 9.

Tout risque d'éjection de la garniture vers le passager, et notamment vers ses yeux, est ainsi supprimé.

Comme on peut le comprendre à présent, le dispositif anti-éjection ainsi obtenu est à la fois très simple et très économique. Il suffit en effet de former la patte 8 lors du moulage de la garniture 2, et de fixer ensuite cette patte avec des moyens qui existent de toute façon. Aucune pièce supplémentaire n'est nécessaire.

Bien entendu, l'invention n'est pas limitée au mode de réalisation décrit et représenté, fourni à titre illustratif et non limitatif.

C'est ainsi par exemple que la garniture 2 pourrait comporter plusieurs pattes analogues à la patte 8.

C'est ainsi également que le logement 12 défini par la garniture 2 pourrait ne renfermer que la sangle 7, le rideau 4 en position repliée étant alors entièrement logé au-dessus de l'habillage de pavillon 16.

C'est ainsi également que l'on pourrait fixer la patte 8 avec les moyens de fixation d'autres accessoires que le pare-soleil 10, tels qu'une poignée haute agencée pour être saisie par le passager afin de stabiliser sa position dans le véhicule.

## Revendications

1. Garniture (2) pour montant de baie (3) de véhicule automobile (1) conformée pour loger au moins une partie (4', 7) d'un dispositif de rideau gonflable (4), caractérisée en ce qu'elle comprend au moins une patte (8) destinée à être fixée à la tôlerie (9) dudit véhicule (1) de manière à éviter l'éjection de ladite garniture (2) lors du déploiement dudit rideau gonflable (4).

2. Garniture (2) selon la revendication 1 pour montant de pare-brise (3) de véhicule automobile (1), caractérisée en ce que ladite patte (8) est destinée à être fixée sur la traverse supérieure (9) dudit pare-brise par des moyens (14, 15) permettant par ailleurs de fixer un autre accessoire tel qu'un pare-soleil (10).

3. Garniture (2) selon l'une des revendications 1 ou 2, caractérisée en ce que ladite patte (8) est formée d'une seule pièce avec le reste de ladite garniture (2), et en ce qu'une ligne de pliage (13) permet l'articulation de cette patte.

4. Garniture (2) selon l'une quelconque des revendications précédentes, ledit dispositif de rideau gonflable (4) comprenant une sangle de retenue (7) interposée entre ledit rideau (4) et ledit montant de baie (3), caractérisée en ce qu'elle est conformée pour loger au moins une partie de ladite sangle (7).

5. Garniture (2) selon la revendication 4, caractérisée en ce qu'elle est conformée pour loger la totalité de ladite sangle (7) et au moins une partie (4') dudit rideau gonflable (4).
